(19) Europäisches Patentamt
European Patent Office
Office européen des brevets

(11) Veröffentlichungsnummer: **0 422 535 B1**

# (12) EUROPÄISCHE PATENTSCHRIFT

(45) Veröffentlichungstag der Patentschrift: **02.03.94**

(51) Int. Cl.5: **C09B 69/10**, C09B 5/62

(21) Anmeldenummer: **90119205.4**

(22) Anmeldetag: **06.10.90**

## (54) Polymerisierbare Perylen-3,4,9,10-tetracarbonsäurebisimide sowie deren Polymerisate.

(30) Priorität: **13.10.89 DE 3934329**

(43) Veröffentlichungstag der Anmeldung:
**17.04.91 Patentblatt 91/16**

(45) Bekanntmachung des Hinweises auf die Patenterteilung:
**02.03.94 Patentblatt 94/09**

(84) Benannte Vertragsstaaten:
**CH DE FR GB IT LI**

(56) Entgegenhaltungen:
**EP-A- 0 112 797**
**DE-A- 3 434 059**

(73) Patentinhaber: **BASF Aktiengesellschaft**
**Carl-Bosch-Strasse 38**
**D-67063 Ludwigshafen(DE)**

(72) Erfinder: **Beck, Karin Heidrun, Dr.**
**Dackenheimer Strasse 3**
**W-6700 Ludwigshafen(DE)**
Erfinder: **Etzbach, Karl-Heinz, Dr.**
**Carl-Bosch-Ring 55**
**W-6710 Frankenthal(DE)**
Erfinder: **Schmidt, Hans-Werner, Prof.-Dr.**
**951 West Campus Lane**
**Goleta, CA 93117(US)**

**EP 0 422 535 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Perylenimide der Formel I

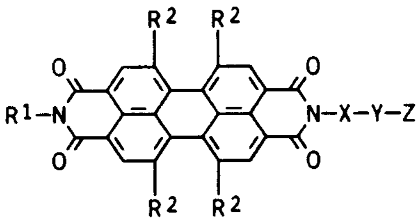 (I),

in der

- $R^1$ $C_1$-$C_{20}$-Alkyl, das gegebenenfalls durch ein oder mehrere Sauerstoffatome unterbrochen ist, oder Phenyl, das durch $C_1$-$C_{13}$-Alkyl oder $C_1$-$C_{13}$-Alkoxy ein- oder mehrfach substituiert ist,
- $R^2$ gleich oder verschieden ist und unabhängig voneinander jeweils Wasserstoff, Chlor, Phenoxy oder durch Halogen, $C_1$-$C_4$-Alkyl oder $C_1$-$C_4$-Alkoxy substituiertes Phenoxy,
- X eine chemische Bindung oder einen Rest der Formel

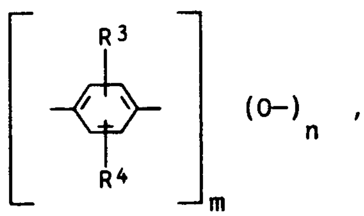 ,

worin $R^3$ und $R^4$ gleich oder verschieden sind und unabhängig voneinander jeweils für Wasserstoff, $C_1$-$C_4$-Alkyl, $C_1$-$C_4$-Alkoxy oder Halogen, m für 1 oder 2 und n für 0 oder 1 stehen,

- Y $C_6$-$C_{24}$-Alkylen, das durch ein oder mehrere Sauerstoffatome oder ein oder mehrere Imino- oder $C_1$-$C_4$-Alkyliminogruppen unterbrochen sein kann, und
- Z Vinyl oder einen Rest der Formel $W\text{-}CO\text{-}C(R^5)=CH_2$, worin $R^5$ für Wasserstoff, Methyl oder Chlor und W für Sauerstoff, Imino oder $C_1$-$C_4$-Alkylimino stehen, bedeuten, deren Verwendung als Monomere für die Herstellung von Polymeren sowie Polymerisate, die die neuen Perylenverbindungen als Monomereinheiten enthalten.

Polymerisierbare Perylen-3,4,9,10-tetracarbonsäurediimide sind bekannt und z.B. in der US-A-4 667 036 beschrieben. Als Spacer (entspricht dem Rest Y in Formel I) ist dabei $C_2$-$C_4$-Alkylen genannt. Es hat sich jedoch gezeigt, daß diese Perylenverbindungen nur unzureichende anwendungstechnische Eigenschaften aufweisen.

Weiterhin sind Polymere mit flüssigkristallinen Eigenschaften bekannt, bei denen die zur Mesophase führenden Reste über flexible Spacer als Seitenketten an eine Polymerhauptkette gebunden sind.

Als Polymerhauptkette kommen z.B. Polyacrylate, Polymethacrylate (DE-A-2 722 589) oder Polysiloxane (EP-A-29 162) in Betracht.

Copolymere mit mesogenen Gruppen und Farbstoffresten in der Seitenkette sind z.B. in der EP-A-90 282 oder EP-A-260 687 beschrieben.

Aufgabe der vorliegenden Erfindung war es nun, neue Farbstoffmonomere auf Basis von Perylimiden bereitzustellen, die problemlos polymerisieren, das heißt bei denen die Polymerisation möglichst nicht, z.B. durch Inhibierung oder sterische Einflüsse, gestört sein sollte.

Daneben sollten die einpolymerisierten Farbstoffe möglichst temperatur-und lichtstabil sein, einen hohen Dichroismus aufweisen und bei Verwendung als Baustein in flüssigkristallinen Polymeren die Eigenschaften der Flüssigkristall-Matrix, z.B. den Klärpunkt, das Phasenverhalten, die Viskosität oder die Ausbildung homogen planarer oder homöotroper Texturen, so wenig wie möglich verändern.

Demgemäß wurden die eingangs näher bezeichneten Perylimide der Formel I gefunden.

Alle in den erfindungsgemäßen Komponenten auftretenden Alkyl- und Alkylengruppen können sowohl geradkettig als auch verzweigt sein.

Wenn bei den erfindungsgemäßen Komponenten Reste auftreten, die durch ein oder mehrere Sauerstoffatome oder Imino- oder $C_1$-$C_4$-Alkyliminogruppen unterbrochen sind, sind solche bevorzugt, die durch 1 bis 3, vorzugsweise 1 bis 2 Sauerstoffatome oder Imino- oder $C_1$-$C_4$-Alkyliminogruppen unterbrochen sind.

Reste $R^3$ und $R^4$ sind z.B. Methoxy, Ethoxy, Propoxy, Isopropoxy, Butoxy, Isobutoxy, sec-Butoxy, Fluor, Chlor oder Brom.

Reste W sind z.B. Methylimino, Ethylimino, Propylimino, Isopropylimino oder Butylimino.

Reste $R^3$ und $R^4$ sind weiterhin, wie auch die Reste $R^1$, z.B. Methyl, Ethyl, Propyl, Isopropyl, Butyl, Isobutyl oder sec-Butyl.

Reste $R^1$ sind weiterhin z.B. Pentyl, Isopentyl, Neopentyl, tert-Pentyl, Hexyl, 2-Methylpentyl, Heptyl, 1-Ethylpentyl, Octyl, 2-Ethylhexyl, Isooctyl, Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl, Eicosyl (Die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436.), 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Isopropoxypropyl, 2- oder 3-Butoxypropyl, 2- oder 3-(2-Ethylhexyloxy)propyl, 2- oder 4-Methoxybutyl, 2- oder 4-Ethoxybutyl, 2- oder 4-Propoxybutyl, 2- oder 4-Isopropoxybutyl, 2- oder 4-Butoxybutyl, 2- oder 4-(2-Ethylhexyloxy)butyl, 2-Methyl-6-isopropylphenyl, 2-Methyl-6-sec-butylphenyl, 2-Methyl-6-tert-butylphenyl, 2-Ethyl-6-isopropylphenyl, 2-Ethyl-6-sec-butylphenyl, 2-Ethyl-6-tert-butylphenyl, 2-Methylphenyl, 2,3-, 2,4-, 2,5- oder 2,6-Dimethylphenyl, 2,4,6-Trimethylphenyl, 2-Methyl-4-methoxyphenyl, 2,5-Dimethyl-4-methoxyphenyl, 2-Ethylphenyl, 2,6-Diethylphenyl, 2,6-Diethyl-4-methylphenyl, 2-Isopropylphenyl, 2,4-, 2,5- oder 2,6-Diisopropylphenyl, 2-n-Butylphenyl, 2-sec-Butylphenyl, 2-n-Pentylphenyl, 2-n-Hexylphenyl, 2-(2-Methylpentyl)phenyl, 2-n-Octylphenyl, 2-Methoxyphenyl, 2-Ethoxyphenyl, 2,5-Dimethoxyphenyl, 2,5-Diethoxyphenyl, 2,4-Dimethoxyphenyl, 2,4-Diethoxyphenyl, 2,3-Dimethoxyphenyl oder 2,3-Diethoxyphenyl.

Reste $R^2$ sind z.B. 2-, 3- oder 4-Fluorphenoxy, 2-, 3- oder 4-Chlorphenoxy, 2-, 3- oder 4-Bromphenoxy, 2-, 3- oder 4-tert-Butylphenoxy, 2-Isopropyl-4-methylphenoxy, 2,3-, 2,4-, 2,5- oder 2,6-Dichlorphenoxy, 2,4,5- oder 2,4,6-Trichlorphenoxy, 2-, 3- oder 4-Methylphenoxy, 2,3-, 2,4-, 2,5-, 2,6- oder 3,5-Dimethylphenoxy, 2,5,6-Trimethylphenoxy, 2-Methyl-4-chlorphenoxy, 2-Methyl-5-chlorphenoxy, 2-Methyl-6-chlorphenoxy, 2-Ethylphenoxy, 2,6-Diethylphenoxy, 2,6-Diethyl-4-methylphenoxy, 2-Isopropylphenoxy, 3-Methyl-4-chlorphenyl, 4-Propylphenoxy, 4-Butylphenoxy, 2-, 3- oder 4-Methoxyphenoxy, 2-, 3- oder 4-Ethoxyphenoxy, 2-, 3- oder 4-Propoxyphenoxy, 2-, 3- oder 4-Isopropoxyphenoxy, 2-, 3- oder 4-Butoxyphenoxy oder 2,4-Dimethoxyphenoxy.

Bevorzugt sind Perylimide der Formel I, in der

- $R^1$ $C_1$-$C_{10}$-Alkyl oder Phenyl, das durch $C_1$-$C_4$-Alkyl oder $C_1$-$C_4$-Alkoxy ein- bis dreifach substituiert ist,
- $R^2$ unabhängig voneinander Wasserstoff, Phenoxy oder Chlor,
- X eine chemische Bindung, Phenylen oder Phenylenoxy,
- Y $C_6$-$C_{13}$-Alkylen und
- Z Vinyl oder einen Rest der Formel $-O-CO-C(R^5)=CH_2$ worin $R^5$ für Wasserstoff oder Methyl steht,

bedeuten.

Die Herstellung der erfindungsgemäßen Perylimide der Formel I erfolgt nach an sich bekannten Methoden. Beispielsweise kann man eine Perylenverbindung der Formel II

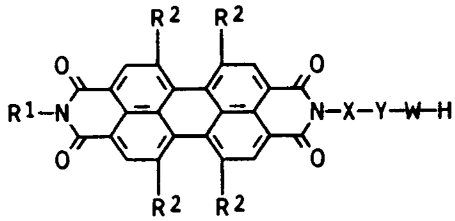 (II),

in der $R^1$, $R^2$, W, X und Y jeweils die obengenannte Bedeutung besitzen, mit einem Acrylsäurehalogenid der Formel III

$CH_2=CH(R^5)$-CO-Hal (III),

in der $R^5$ die obengenannte Bedeutung besitzt, und Hal für Halogen (z.B. Chlor oder Brom) steht, in einem inerten organischen Verdünnungsmittel, z.B. Dioxan, Tetrahydrofuran, N,N-Dimethylformamid, N-Methylpyrrolidinon oder Methylenchlorid, in Gegenwart einer Base, z.B. Triethylamin oder Pyridin, umsetzen.

Wenn Z Vinyl bedeutet, wird zweckmäßig ein Perylenderivat der Formel IV

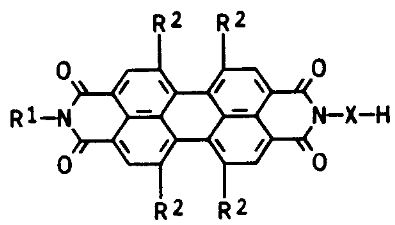

(IV),

in der $R^1$, $R^2$ und X jeweils die obengenannte Bedeutung besitzen, mit einem Alkenylhalogenid der Formel V

$Hal\text{-}Y\text{-}CH=CH_2$ (V),

in der Hal für Halogen (z.B. Chlor oder Brom) steht und Y die obengenannte Bedeutung besitzt, in einem inerten organischen Verdünnungsmittel, z.B. N,N-Dimethylformamid, N-Methylpyrrolidinon oder Dimethylsulfoxid, in Gegenwart einer Base, z.B. Natrium- oder Kaliumcarbonat oder -hydrogencarbonat, zur Reaktion gebracht.

Die als Ausgangsverbindungen dienenden Perylenkomponenten II und IV sind an sich bekannt und beispielsweise in der DE-A-2 451 782, US-A-4 379 934, US-A-4 446 324 oder EP-A-227 980 beschrieben oder können nach den dort genannten Methoden erhalten werden.

Wenn $R^2$ gegebenenfalls substituiertes Phenoxy bedeutet, können die Farbstoffe auch aus der entsprechenden Chlorverbindungen der Formel I ($R^2$ = Chlor) durch Umsetzung mit gegebenenfalls substituierten Phenolen in Gegenwart einer Base hergestellt werden.

Die neuen Perylimide der Formel I eignen sich in vorteilhafter Weise als Monomere für die Herstellung von Polymeren, die Monomereneinheiten, denen die Perylimide der Formel I zugrundeliegen, in einpolymerisierter Form enthalten.

Ein weiterer Gegenstand der vorliegenden Erfindung sind dementsprechend Perylimide enthaltende Polymerisate, die als charakteristische Monomereinheiten Reste der Formel VI und VII

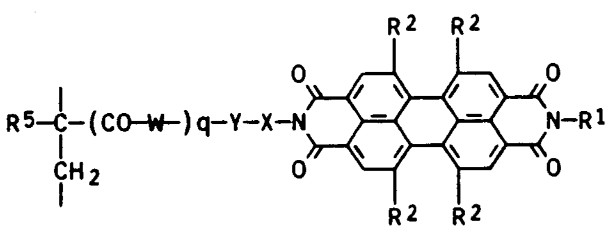

(VI)

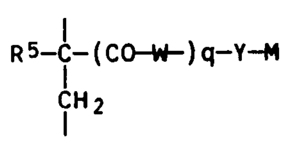

aufweisen, wobei

- $R^1$ $C_1$-$C_{20}$-Alkyl, das gegebenenfalls durch ein oder mehrere Sauerstoffatome unterbrochen ist, oder Phenyl, das durch $C_1$-$C_{13}$-Alkyl oder $C_1$-$C_{13}$-Alkoxy ein- oder mehrfach substituiert ist,
- $R^2$ gleich oder verschieden ist und unabhängig voneinander jeweils Wasserstoff, Chlor, Phenoxy oder durch Halogen, $C_1$-$C_4$-Alkyl oder $C_1$-$C_4$-Alkoxy substituiertes Phenoxy,
- X eine chemische Bindung oder einen Rest der Formel

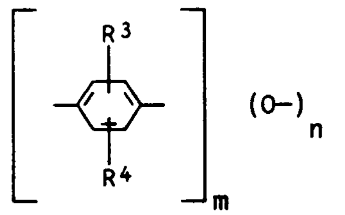 ,

worin $R^3$ und $R^4$ gleich oder verschieden sind und unabhängig voneinander jeweils für Wasserstoff, $C_1$-$C_4$-Alkyl, $C_1$-$C_4$-Alkoxy oder Halogen, m für 1 oder 2 und n für 0 oder 1 stehen,

Y $C_6$-$C_{24}$-Alkylen, das durch ein oder mehrere Sauerstoffatome oder eine oder mehrere Imino- oder $C_1$-$C_4$-Alkyliminogruppen unterbrochen sein kann,

W Sauerstoff, Imino oder $C_1$-$C_4$-Alkylimino,

q 0 oder 1

$R^5$, für den Fall, daß q für 0 steht, Wasserstoff, oder für den Fall, daß q für 1 steht, Wasserstoff, Methyl oder Chlor und

M einen mesogenen Rest bedeuten, und wobei der Anteil der Monomereinheiten der Formel VI 0,001 bis 40 Gew.-% , bezogen auf das Gewicht des Polymerisats, und das mittlere Molekulargewicht des Polymerisats 2.000 bis 100.000 betragen.

Ein weiterer Gegenstand der vorliegenden Erfindung sind Perylimide enthaltende Polymerisate, die als charakteristische Monomereinheiten Reste der Formeln VIII und IX

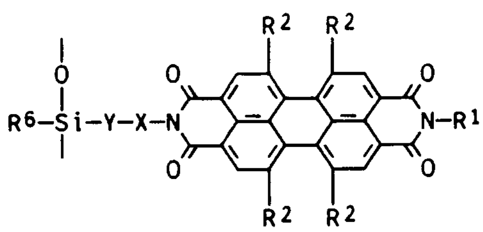 (VIII)

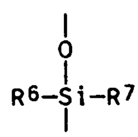 (IX)

aufweisen, wobei

$R^1$ $C_1$-$C_{20}$-Alkyl, das gegebenenfalls durch ein oder mehrere Sauerstoffatome unterbrochen ist, oder Phenyl, das durch $C_1$-$C_{13}$-Alkyl oder $C_1$-$C_{13}$-Alkoxy ein- oder mehrfach substituiert ist,

$R^2$ gleich oder verschieden ist und unabhängig voneinander jeweils Wasserstoff, Chlor, Phenoxy oder durch Halogen, $C_1$-$C_4$-Alkyl oder $C_1$-$C_4$-Alkoxy substituiertes Phenoxy,

X eine chemische Bindung oder einen Rest der Formel

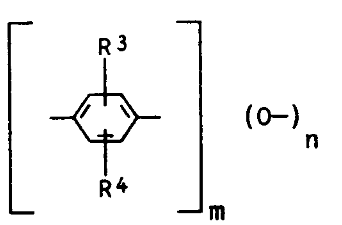 ,

worin $R^3$ und $R^4$ gleich oder verschieden sind und unabhängig voneinander jeweils für Wasserstoff, $C_1$-$C_4$-Alkyl, $C_1$-$C_4$-Alkoxy oder Halogen, m für 1 oder 2 und n für 0 oder 1 stehen,

Y $C_6$-$C_{24}$-Alkylen, das durch ein oder mehrere Sauerstoffatome oder eine oder mehrere Imino- oder $C_1$-$C_4$-Alkyliminogruppen unterbrochen sein kann,

$R^6$ $C_1$-$C_4$-Alkyl oder Phenyl und

$R^7$ $C_1$-$C_4$-Alkyl, Phenyl oder einen Rest der Formel Y-M, in der Y die obengenannte Bedeutung besitzt und M für einen mesogenen Rest steht, bedeuten, und wobei der Anteil der Monomereinheiten der Formel VIII

0,001 bis 40 Gew.-%, bezogen auf das Gewicht des Polymerisats, und das mittlere Molekulargewicht des Polymerisats 2.000 bis 100.000 betragen.

Wie oben bereits ausgeführt, beträgt der Anteil der Monomereinheiten der Formel VI oder VIII 0,001 bis 40 Gew.-%, vorzugsweise 0,01 bis 20 Gew.-%, jeweils bezogen auf das Gewicht des Polymerisats. Das mittlere Molekulargewicht des Polymerisats beträgt 2.000 bis 100.000, vorzugsweise 5.000 bis 20.000. (Das mittlere Molekulargewicht bezieht sich dabei auf Untersuchungen, die mittels analytischer Gelpermeationschromatographie an PL-Gel (10, 100, 1.000, 10.000 nm) durchgeführt wurden. Als Eluens diente Tetrahydrofuran. Zur Eichung wurden Polystyrol-Standards mit Polydispersitäten < 1,1 verwendet.)

Als mesogene Reste M in Formel VII oder IX kommen beispielsweise die Reste

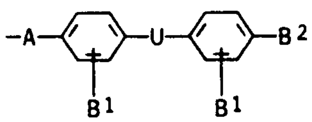 , 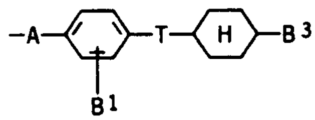 , 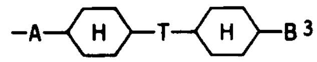 ,

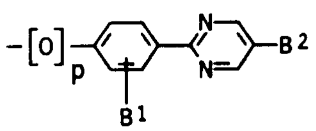 , 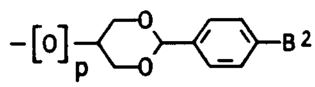

oder 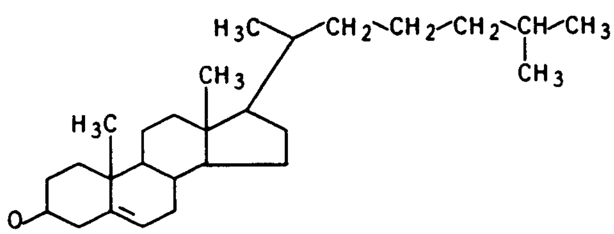

in Betracht, wobei

A eine chemische Bindung, Sauerstoff, Schwefel oder ein Rest der Formel -CO-O-, -O-CO- ,

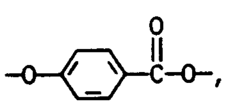 , 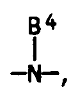 , 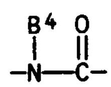 oder 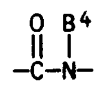 ,

worin

$B^4$ jeweils für Wasserstoff oder $C_1$-$C_4$-Alkyl steht,

U eine chemische Bindung oder einen Rest der Formel

-CO-O-, -O-CO- , -CH = CH-, $-CH_2-CH_2-$, -N = N-,

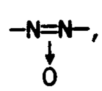 ,

-N = CH- oder -CH = N- ,

T eine chemische Bindung oder einen Rest der Formel

-CO-O- oder -O-CO-,

$B^1$ Wasserstoff, Methyl, Ethyl, Methoxy, Ethoxy oder Chlor

$B^2$ Wasserstoff, gegebenenfalls durch Chlor oder Phenyl substituiertes $C_1$-$C_{12}$-Alkyl, $C_5$-$C_7$-Cycloalkyl, gegebenenfalls durch Chlor oder Phenyl substituiertes $C_1$-$C_{12}$-Alkoxy, $C_4$-$C_{12}$-Alkoxycarbonyl, $C_1$-$C_{12}$-Alkanoyloxy, Fluor, Chlor, Brom, Cyano, 4-Cyanophenyl oder Nitro,

$B^3$ Wasserstoff, gegebenenfalls durch Chlor oder Phenyl substituiertes $C_1$-$C_{12}$-Alkyl, gegebenenfalls durch Chlor oder Phenyl substituiertes $C_1$-$C_{12}$-Alkoxy oder $C_1$-$C_{12}$-Alkoxycarbonyl und

P 0 oder 1 bedeuten.

Hervorzuheben sind Perylimide aufweisende Polymerisate, die optisch aktive Gruppen aufweisen. Hierbei kann die optisch aktive Gruppe im Rest Y oder im mesogenen Rest M, dabei vorzugsweise im Rest $B^2$ oder $B^3$, enthalten sein.

Einzelne optisch aktive Gruppen sind beispielsweise

- für Y:

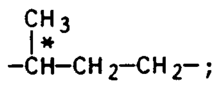 oder 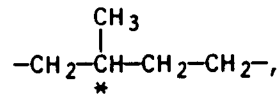

- für $B^2$ oder $B^3$:

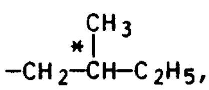, 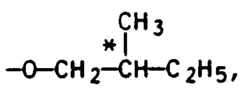, 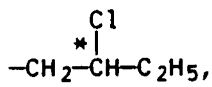, 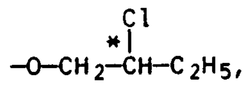, 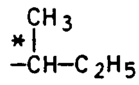,

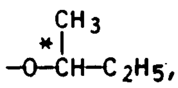, 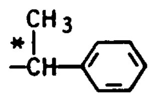 oder 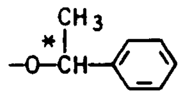 .

Bevorzugt sind Perylimide enthaltende Polymerisate, die als charakteristische Monomereinheiten Reste der obengenanten Formeln VI und VII aufweisen, wobei

X eine chemische Bindung,
Y unverzweigtes $C_6$-$C_{12}$-Alkylen,
W Sauerstoff,
q 1,
$R^5$ Wasserstoff oder Methyl und
M einen Rest der Formel

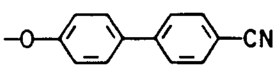 , 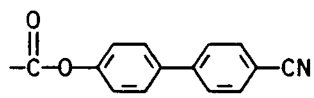 , 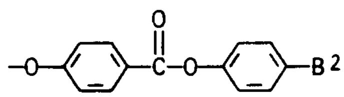 ,

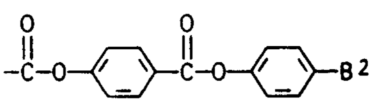 , 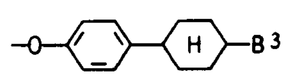 , 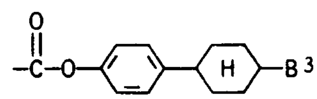 ,

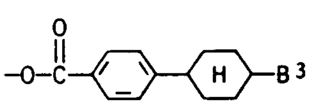 , 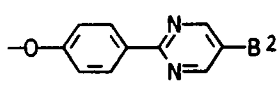 , 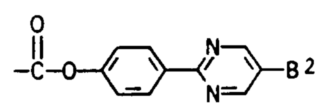 ,

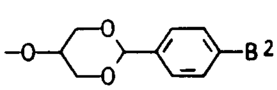 oder 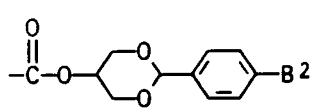 , worin

$B^2$ und $B^3$ jeweils die obengenannte Bedeutung besitzen, bedeuten. Dabei sind insbesondere solche Polymerisate hervorzuheben, in denen $B^2$ für $C_2$-$C_8$-Alkyl, $C_2$-$C_8$-Alkoxy, Fluor, Chlor, Brom, Cyano, 4-Cyanophenyl oder Nitro und $B^3$ für $C_2$-$C_8$-Alkyl stehen.

Weiterhin bevorzugt sind Perylimide enthaltende Polymerisate, die als charakteristische Monomereinheiten Reste der obengenannten Formel VIII sowie der Formel X und XI

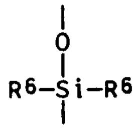 (X)

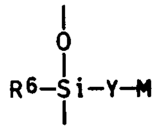 (XI)

aufweisen, worin
$R^6$ jeweils $C_1$-$C_4$-Alkyl, insbesondere Methyl, bedeutet und Y und M jeweils die obengenannte Bedeutung besitzen, wobei auch hier die oben unter Formel VII bereits als bevorzugt charakterisierten mesogenen Reste M besonders hervorzuheben sind.

Die Herstellung der farbstoffhaltigen Polyacrylate und Polymethacrylate erfolgt nach an sich bekannten Methoden.

Die Herstellung der farbstoffhaltigen Polysiloxane kann in einer polymeranalogen Reaktion (siehe z.B. Makromol. Chem., Rapid Commun. 7, 71 bis 76, (1986)), erfolgen.

Weitere Einzelheiten der Herstellung können den Beispielen entnommen werden.

Die neuen Perylimide der Formel I zeigen nach der Polymerisation eine hervorragende Licht- und Thermostabilität. Nach der Copolymerisation mit mesogenen Monomeren zeichnen sich die neuen Farbstoffe durch einen höheren Dichroismus und eine bessere Verträglichkeit mit der flüssigkristallinen Polymermatrix als die bekannten Produkte aus. Zudem behindern sie die Polymerisation weniger als die bekannten Derivate.

Die farbstoffhaltigen flüssigkristallinen Copolymere können beispielsweise, wie in Makromol. Chem. Band 188, Seiten 1355 bis 1366 (1987), gezeigt, zusammen mit niedermolekularen Flüssigkristallen oder Flüssigkristallmischungen in elektrooptische Anzeigen vom Guest-Host-Typ eingesetzt werden und dienen hierbei als Lösungsvermittler für den Farbstoff.

Besonders hervorzuheben ist ihre technische Anwendung bei der reversiblen optischen Informationsspeicherung (EP-A 171 045, EP-A 278 446).

Dabei sind insbesondere die hohe Empfindlichkeit der farbstoffhaltigen flüssigkristallinen Polymerschicht beim Einschreiben der Information, die gute Beständigkeit der zur Absorption der Laserenergie verwendeten Farbstoffe gegen Licht und Wärme, der möglichst hohe Dichroismus des eingesetzten Farbstoffes, der sich beim Auslesen der Information in einem hohen Signal-Rausch-Verhältnis zeigt und das rasche Löschen der Information, das unter anderem eine möglichst geringe Viskosität des erwärmten Spots erfordert, als wichtige Parameter zu nennen. Die erfindungsgemäßen Farbstoffe erfüllen alle diese Forderungen weitestgehend und zeichnen sich durch hervorragende Stabilität gegenüber Licht und Wärme und ein hohes dichroitisches Verhältnis aus. Zudem beeinflussen sie die Viskosität eines flüssigkristallinen Polymeren nur wenig.

Die erfindungsgemäßen polymerisierbaren Farbstoffe zeichnen sich zusätzlich durch eine hohe Fluoreszenzquantenausbeute aus und können nach der Copolymerisation mit beispielsweise Methylmethacrylat, Methylacrylat oder Styrol, als Lichtsammelsysteme eingesetzt werden. Sie zeichnen sich hierbei durch sehr gute Copolymerisationseigenschaften und eine hohe Polymerverträglichkeit aus.

Weitere vorteilhafte Anwendungen in Copolymeren sind z.B. fluoreszierende Polymere für Dekorationszwecke, fluoreszierende Folien für Gewächshäuser oder die Verwendung als Fluoreszenzpigmente.

Die folgenden Beispiele sollen die Erfindung näher erläutern.

Beispiel 1

A) Herstellung der Monomeren

Zu einer Mischung aus 2,70 g N-Butyl-N'-(6-hydroxyhexyl)-1,6,7,12-tetrachlor-3,4,9,10-perylenbiscarboximid, 0,81 g Triethylamin, 0,05 g Hydrochinon und 30 g Dioxan gab man bei Raumtemperatur 0,72 g Acrylsäurechlorid und erhitzte danach 3 Stunden zum Sieden. Dann gab man in der Hitze 150 ml Wasser zu, rührte das Gemisch über Nacht und saugte den Niederschlag ab. Nach dem Waschen mit heißem Wasser und dem Trocknen erhielt man 2,8 g Rohprodukt. Dieses wurde durch Chromatographie über

Kieselgel mit Toluol/Essigester (40:1 v/v) als Eluens und anschließendes Verrühren mit n-Hexan gereinigt. Man erhielt 2,2 g reinen Farbstoff der Formel:

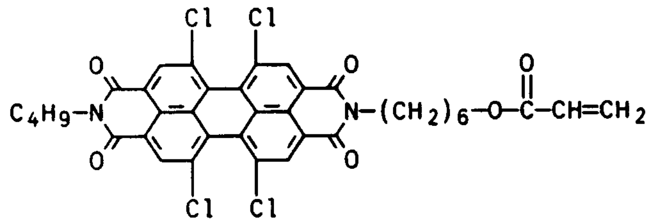

Schmp.: 230 °C

| | | | | | | |
|---|---|---|---|---|---|---|
| $C_{37}H_{28}Cl_4N_2O_6$ (738,46) | ber. | C 60,2 | H 3,8 | Cl 19,2 | N 3,8 | O 13,0 |
| | gef. | C 60,4 | H 4,0 | Cl 18,9 | N 3,6 | O 13,2 |

$\lambda_{max}$ ($CH_2Cl_2$): 517 nm (38600)
Ordnungsgrad S (ZLI 2452 Fa. Merck): 0,75
Der Ordnungsgrad S wurde nach der bekannten Gleichung

$$S = \frac{CR-1}{CR+2}$$

in handelsüblichen Meßzellen mit homogen-planarer Randorientierung (Polyimid) bestimmt. Das dichroitische Verhältnis CR wurde durch Messung der Extinktionen E″ (Messung mit parallel zur Vorzugsrichtung der nematischen Phase polarisiertem Licht) und $E^{\perp}$ (Messung mit senkrecht zur Vorzugsrichtung der nematischen Phase polarisiertem Licht) nach der Beziehung

$$CR = \frac{E''}{E^{\perp}}$$

ermittelt, wobei die Farbstoffkonzentration so gewählt wurde, daß E″ zwischen 1 und 2 lag. Die Messungen wurden an einem Spektralphotometer der Fa. Hitachi U 3200 durchgeführt.

Beispiel 2

Eine Mischung aus 5,70 g N-Butyl-1,6,7,12-tetrachlor-3,4,9,10-perylenbiscarboximid, 2,42 g 11-Bromundec-1-en, 1,44 g Kaliumcarbonat und 50 g N,N-Dimethylformamid wurde 3 Stunden bei 100 °C gerührt. Nach dem Abkühlen des Gemisches auf Raumtemperatur saugte man den gebildeten Niederschlag ab und wusch ihn mit wenig N,N-Dimethylformamid und dann mit Wasser. Nach dem Trocknen erhielt man 5,7 g Rohprodukt, das durch zweimalige Umkristallisation aus Eisessig gereinigt wurde. Man isolierte 3,9 g reinen Farbstoff der Formel:

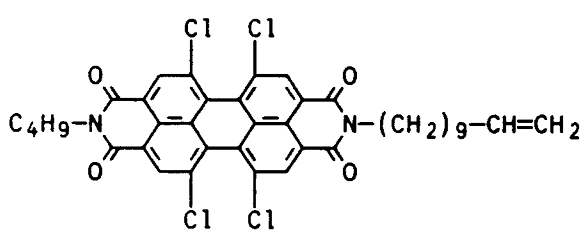

Schmp.: 232 °C
$\lambda_{max}$ ($CH_2Cl_2$): 517 nm (40200)

Beispiel 3

Eine Mischung aus 4,20 g der Verbindung des Beispiels 2, 2,67 g Phenol, 3,94 g Kaliumcarbonat und 40 g N-Methylpyrrolidon wurde 8 Stunden unter Rühren auf 110 °C erhitzt. Nach dem Erkalten des Gemisches saugte man den gebildeten Niederschlag ab, wusch ihn mit wenig N-Methylpyrrolidon und dann mit Wasser und trocknete ihn. Der Rohfarbstoff (4,65 g) wurde durch Chromatographie über Kieselgel mit Methylenchlorid als Eluens und anschließendes Verrühren mit Diethylether gereinigt. Man erhielt 3,2 g reinen Farbstoff der Formel

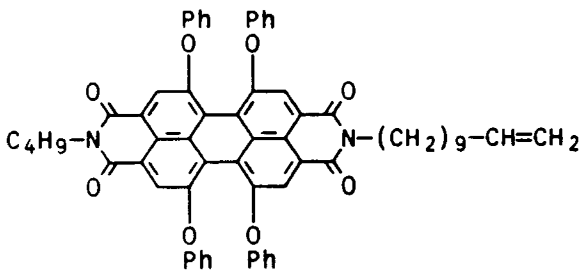

Schmp.: 285 °C

| | | | | | |
|---|---|---|---|---|---|
| $C_{63}H_{54}N_2O_8$ (967,14) | ber.<br>gef. | C 78,24<br>C 77,9 | H 5,63<br>H 5,9 | N 2,90<br>N 2,8 | O 13,23<br>O 13,0 |

$\lambda_{max}$ ($CH_2Cl_2$): 572 nm (44600)
Die in der folgenden Tabelle 1 aufgeführten Perylimide der Formel

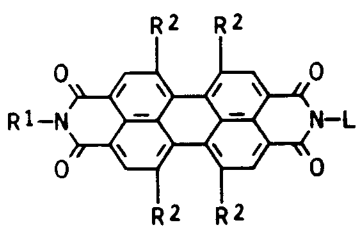

werden in analoger Weise erhalten.

Tabelle 1

| Bsp. Nr. | $R^1$ | $R^2$ | L |
|---|---|---|---|
| 4 | $-C_4H_9$ | $-Cl$ | 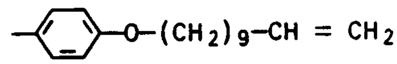 |
| 5 | $-C_4H_9$ | 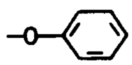 | 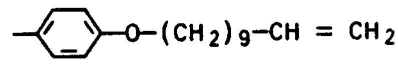 |
| 6 | 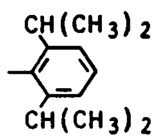 | $-Cl$ | 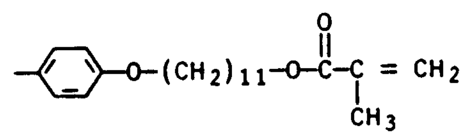 |
| 7 | 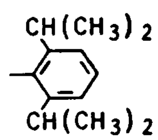 | 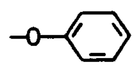 | 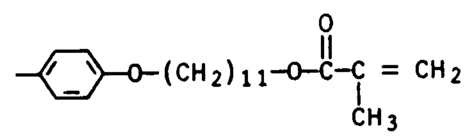 |
| 8 | 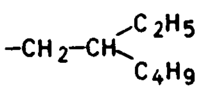 | $-Cl$ | 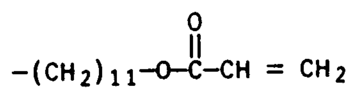 |
| 9 | 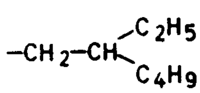 | 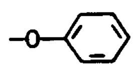 | 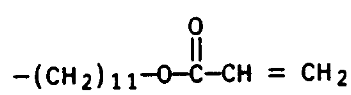 |

B) Herstellung der Polymeren

Allgemeine Polymerisationsvorschrift für die Herstellung von Polyacrylaten

In einem Schlenkgefäß wird eine Monomerlösung, bestehend aus 10 Gew.% einer Mischung aus Farbstoffmonomer und mesogenem Monomer in absolutem Dioxan mit 1 mol% Azo-bis-isobuttersäurenitril versetzt. Nach 10-minütigem Hindurchleiten von Stickstoff wird die Monomerlösung bei 70 °C thermostabilisiert. Nach erfolgter Polymerisation werden die Polymeren von den Monomeren ausschlußchromatographisch am System Merkogel® 6000/Tetrahydrofuran (Fa. Merck, Darmstadt) abgetrennt. Nach der Entfernung des Tetrahydrofurans wird das Polymere im Hochvakuum getrocknet. Die quantitative Zusammensetzung der Copolymeren erfolgt mittels UV-Spektroskopie und Elementaranalyse. Die Bestimmung der Phasenübergangstemperaturen erfolgt differentialkalorimetrisch. Die Zuordnung der flüssigkristallinen Phasen erfolgt anhand der unter einem mit Heiztisch ausgestatteten Polarisationsmikroskop auftretenden Texturen.

In der folgenden Tabelle 2 sind Polymerisate der Formel

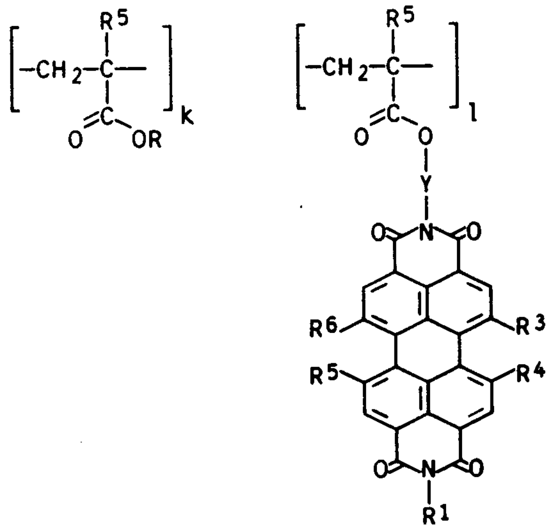

aufgeführt, die nach obiger Vorschrift hergestellt wurden.

(Bei den Indices k und l handelt es sich um die Gewichtsprozente der jeweiligen Monomereinheiten, bezogen auf das Gewicht des Polymerisats.)

Tabelle 2

| Bsp. Nr. | k | l | R | $R^5$ | $R^2$ | $R^1$ | Y |
|---|---|---|---|---|---|---|---|
| 10 | 99,994 | 0,006 | $-CH_3$ | H | Cl | $-C_4H_9$ | $-(CH_2)_6-$ |
| 11 | 99,4 | 0,6 | $-CH_3$ | H | Cl | $-C_4H_9$ | $-(CH_2)_6-$ |
| 12 | 99,0 | 1,0 | $-CH_3$ | H | Cl | $-C_4H_9$ | $-(CH_2)_6-$ |
| 13 | 90,0 | 10,0 | $-CH_3$ | H | Cl | $-C_4H_9$ | $-(CH_2)_6-$ |
| 14 | 99,0 | 1,0 | $-CH_3$ | $-CH_3$ | Cl | $-C_4H_9$ | $-(CH_2)_6-$ |
| 15 | 99,0 | 1,0 | $-CH_3$ | $-Cl$ | Cl | $-C_4H_9$ | $-(CH_2)_6-$ |
| 16 | 99,0 | 1,0 | $-CH_3$ | H | $-OPh$ | $-C_4H_9$ | $-(CH_2)_6-$ |
| 17 | 99,994 | 0,006 | 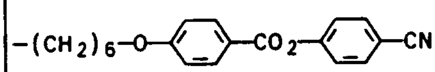 | H | Cl | $-C_4H_9$ | $-(CH_2)_6-$ |
| 18 | 99,4 | 0,6 | 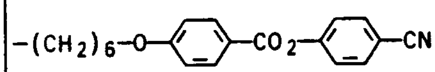 | H | Cl | $-C_4H_9$ | $-(CH_2)_6-$ |
| 19 | 99,0 | 1,0 | 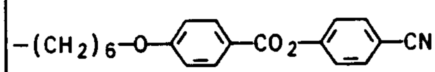 | H | Cl | $-C_4H_9$ | $-(CH_2)_6-$ |
| 20 | 90 | 10 | 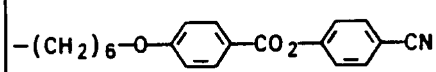 | H | Cl | $-C_4H_9$ | $-(CH_2)_6-$ |
| 21 | 70 | 30 | 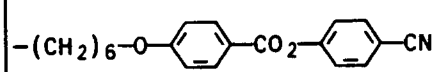 | H | Cl | $-C_4H_9$ | $-(CH_2)_6-$ |
| 22 | 99,994 | 0,006 | 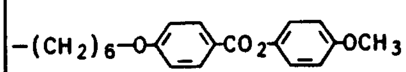 | H | Cl | $-C_4H_9$ | $-(CH_2)_6-$ |
| 23 | 99 | 1 | 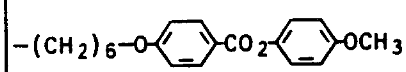 | H | Cl | $-C_4H_9$ | $-(CH_2)_6-$ |
| 24 | 90 | 10 | 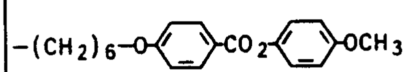 | H | Cl | $-C_4H_9$ | $-(CH_2)_6-$ |
| 25 | 99 | 1 | 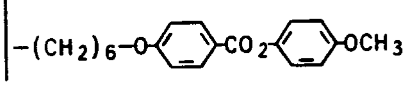 | H | $-OPh$ | $-C_4H_9$ | $-(CH_2)_6-$ |

Die Polymerfarbstoffe 10 bis 25 wurden nach der allgemeinen Vorschrift in Dioxan hergestellt, wobei der Anteil des monomeren Perylimids variiert wurde. Die neuen Polymerfarbstoffe 17 bis 25 bilden beim Tempern im Heiztisch des Polarisationsmikroskops flüssigkristalline Texturen aus.

In Tabelle 3 sind die Phasenübergänge der Verbindungen 12 bis 25 mit den Ergebnissen der differentialkalorimetrischen und polarisationsmikroskopischen Untersuchungen zusammengefaßt (g: glasig;

s: smektisch; n: nematisch; i: isotrop).

Tabelle 3

| Bsp. | Phasenübergänge (°C) |
|---|---|
| 17 | g 29 n 123 i |
| 18 | g 29 n 124 i |
| 19 | g 31 n 124 i |
| 20 | g 38 n 120 i |
| 21 | g 42 n 120 i |
| 22 | g 28 s 92 n 117 i |
| 23 | g 29 s 90 n 115 i |
| 24 | g 34 s 90 n 112 i |
| 25 | g 30 s 92 n 115 i |

Die flüssigkristallinen Farbstoffe lassen sich makroskopisch zwischen oberflächenbehandelten Glasplatten orientieren. Messungen des Ordnungsgrads ergeben für den Farbstoff des Beispiels Nr. 18 (nematisches Glas) einen Wert von 0,60 und für den Farbstoff des Beispiels Nr. 23 (smektisches Glas) 0,78.

Synthese der Polysiloxane

Beispiel 26

0,32 ml eines Polysiloxans der Formel

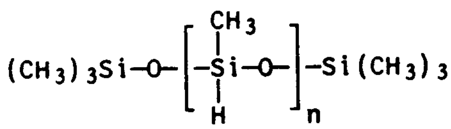

$\bar{n}$ = 35 (Fa. Petrarch Systems Inc.),
2,5 g des Mesogens der Formel

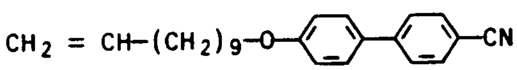

sowie 0,74 g des Farbstoffs des Beispiels 2 wurden in einem Schlenkgefäß in 100 ml absolutem Toluol unter Argon gelöst. Dann wurden 0,8 mg Hexachloroplatinsäure zugegeben. Das Gemisch wurde 2 Tage bei 60 °C gerührt, die erhaltene Reaktionslösung dann auf Methanol gefällt und das Polymer abgesaugt. Das Rohpolymer wurde in Tetrahydrofuran gelöst, die Lösung filtriert und erneut auf Methanol gefällt. Dieser Vorgang wurde 3 mal wiederholt. Nach Trocknen im Hochvakuum bei 100 °C erhielt man 1,4 g eines Polymerisats, das im Mittel an der Polymerhauptkette 35 Reste (Mesogen und Fluoreszenzfarbstoff im Verhältnis 9:1) enthält.
Chlorgehalt: 3 %
$\bar{M}n$ : 9016
Phasenverhalten: g 16 °C s 146 °C i

## Patentansprüche

1. Perylimide der Formel

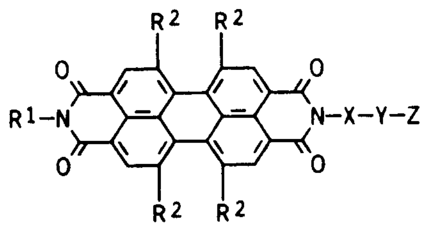

(I),

in der

$R^1$ $C_1$-$C_{20}$-Alkyl, das gegebenenfalls durch ein oder mehrere Sauerstoffatome unterbrochen ist, oder Phenyl, das durch $C_1$-$C_{13}$-Alkyl oder $C_1$-$C_{13}$-Alkoxy ein- oder mehrfach substituiert ist,

$R^2$ gleich oder verschieden ist und unabhängig voneinander jeweils Wasserstoff, Chlor, Phenoxy oder durch Halogen, $C_1$-$C_4$-Alkyl oder $C_1$-$C_4$-Alkoxy substituiertes Phenoxy,

X eine chemische Bindung oder einen Rest der Formel

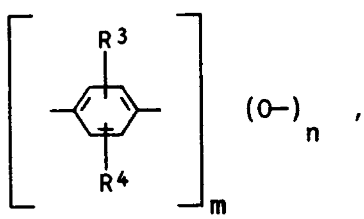

,

worin $R^3$ und $R^4$ gleich oder verschieden sind und unabhängig voneinander jeweils für Wasserstoff, $C_1$-$C_4$-Alkyl, $C_1$-$C_4$-Alkoxy oder Halogen, m für 1 oder 2 und n für 0 oder 1 stehen,

Y $C_6$-$C_{24}$-Alkylen, das durch ein oder mehrere Sauerstoffatome oder ein oder mehrere Imino- oder ($C_1$-$C_4$-Alkyliminogruppen unterbrochen sein kann, und

Z Vinyl oder einen Rest der Formel W-CO-C($R^5$) = $CH_2$, worin $R^5$ für Wasserstoff, Methyl oder Chlor und W für Sauerstoff, Imino oder $C_1$-$C_4$-Alkylimino stehen, bedeuten.

2. Perylimide nach Anspruch 1, dadurch gekennzeichnet, daß

$R^1$ $C_1$-$C_{10}$-Alkyl oder Phenyl, das durch $C_1$-$C_4$-Alkyl oder $C_1$-$C_4$-Alkoxy ein- bis dreifach substituiert ist,

$R^2$ unabhängig voneinander Wasserstoff, Phenoxy oder Chlor,

X eine chemische Bindung, Phenylen oder Phenylenoxy,

Y $C_6$-$C_{13}$-Alkylen und

Z Vinyl oder einen Rest der Formel -O-CO-C($R^5$) = $CH_2$, worin $R^5$ für Wasserstoff oder Methyl steht, bedeuten.

3. Verwendung der Perylimide gemäß Anspruch 1 als Monomere für die Herstellung von Polymeren.

4. Perylimide enthaltende Polymerisate, die als charakteristische Monomereinheiten Reste der Formeln VI und VII

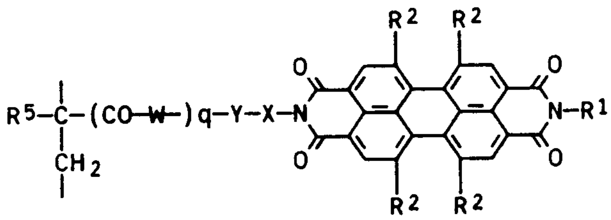

(VI)

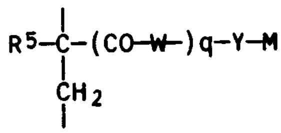

(VII)

aufweisen, wobei

- $R^1$ $C_1$-$C_{20}$-Alkyl, das gegebenenfalls durch ein oder mehrere Sauerstoffatome unterbrochen ist, oder Phenyl, das durch $C_1$-$C_{13}$-Alkyl oder $C_1$-$C_{13}$-Alkoxy ein- oder mehrfach substituiert ist,
- $R^2$ gleich oder verschieden ist und unabhängig voneinander jeweils Wasserstoff, Chlor, Phenoxy oder durch Halogen, $C_1$-$C_4$-Alkyl oder $C_1$-$C_4$-Alkoxy substituiertes Phenoxy,
- X eine chemische Bindung oder einen Rest der Formel

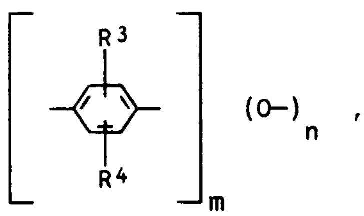

  worin $R^3$ und $R^4$ gleich oder verschieden sind und unabhängig voneinander jeweils für Wasserstoff, $C_1$-$C_4$-Alkyl, $C_1$-$C_4$-Alkoxy oder Halogen, m für 1 oder 2 und n für 0 oder 1 stehen,
- Y $C_6$-$C_{24}$-Alkylen, das durch ein oder mehrere Sauerstoffatome oder eine oder mehrere Imino- oder $C_1$-$C_4$-Alkyliminogruppen unterbrochen sein kann, und
- W Sauerstoff Imino oder $C_1$-$C_4$-Alkylimino,
- q 0 oder 1
- $R^5$, für den Fall, daß g für 0 steht, Wasserstoff, oder für den Fall, daß q für 1 steht, Wasserstoff, Methyl oder Chlor und

M einen mesogenen Rest bedeuten, und wobei der Anteil der Monomereinheiten der Formel VI 0,001 bis 40 Gew.-%, bezogen auf das Gewicht des Polymerisats, und das mittlere Molekulargewicht des Polymerisats 2.000 bis 100.000 betragen.

**5.** Perylimide enthaltende Polymerisate, die als charakteristische Monomereinheiten Reste der Formeln VIII und IX

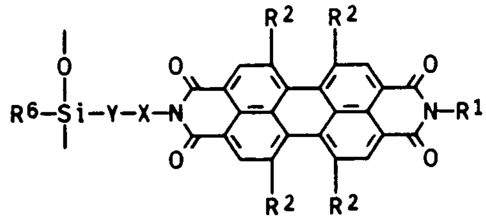

(VIII)

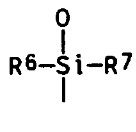

(IX)

aufweisen, wobei

$R^1$ $C_1$-$C_{20}$-Alkyl, das gegebenenfalls durch ein oder mehrere Sauerstoffatome unterbrochen ist, oder Phenyl, das durch $C_1$-$C_{13}$-Alkyl oder $C_1$-$C_{13}$-Alkoxy ein- oder mehrfach substituiert ist,

$R^2$ gleich oder verschieden ist und unabhängig voneinander jeweils Wasserstoff, Chlor, Phenoxy oder durch Halogen, $C_1$-$C_4$-Alkyl oder $C_1$-$C_4$-Alkoxy substituiertes Phenoxy,

X eine chemische Bindung oder einen Rest der Formel

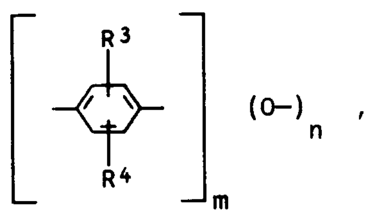

worin $R^3$ und $R^4$ gleich oder verschieden sind und unabhängig voneinander jeweils für Wasserstoff, $C_1$-$C_4$-Alkyl, $C_1$-$C_4$-Alkoxy oder Halogen, m für 1 oder 2 und n für 0 oder 1 stehen,

Y $C_6$-$C_{24}$-Alkylen, das durch ein oder mehrere Sauerstoffatome oder eine oder mehrere Imino- oder $C_1$-$C_4$-Alkyliminogruppen unterbrochen sein kann,

$R^6$ $C_1$-$C_4$-Alkyl oder Phenyl und

$R^7$ $C_1$-$C_4$-Alkyl, Phenyl oder einen Rest der Formel Y-M, in der Y die obengenannte Bedeutung besitzt und M für einen mesogenen Rest steht, bedeuten,

und wobei der Anteil der Monomereinheit der Formel VIII 0,001 bis 40 Gew.-%, bezogen auf das Gewicht des Polymerisats, und das mittlere Molekulargewicht des Polymerisats 2.000 bis 100.000 betragen.

## Claims

**1.** A perylimide of the formula

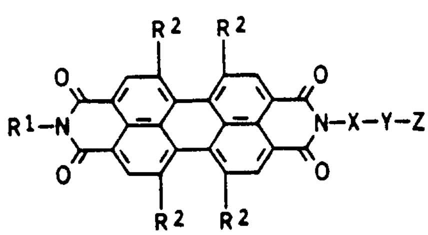

(I),

where

$R^1$ is $C_1$-$C_{20}$-alkyl, which may be interrupted by one or more oxygen atoms, or is phenyl which

is monosubstituted or polysubstituted by $C_1$-$C_{13}$-alkyl or $C_1$-$C_{13}$-alkoxy,

$R^2$ is identical or different at each of its appearances, each appearance of $R^2$ being independently of the others hydrogen, chlorine, phenoxy or halogen-, $C_1$-$C_4$-alkyl- or $C_1$-$C_4$-alkoxy-substituted phenoxy,

X is a chemical bond or a radical of the formula

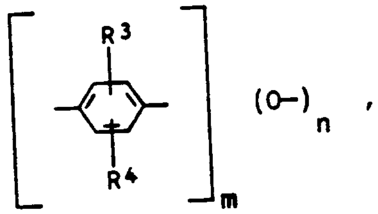

where $R^3$ and $R^4$ are identical or different and each is independently of the other hydrogen, $C_1$-$C_4$-alkyl, $C_1$-$C_4$-alkoxy or halogen, m is 1 or 2 and n is 0 or 1,

Y is $C_6$-$C_{24}$-alkylene which may be interrupted by one or more oxygen atoms or by one or more imino or $C_1$-$C_4$-alkylimino groups, and

Z is vinyl or a radical of the formula W-CO-C($R^5$) = $CH_2$, where $R^5$ is hydrogen, methyl or chlorine and W is oxygen, imino or $C_1$-$C_4$-alkylimino.

**2.** A perylimide as claimed in claim 1, wherein

$R^1$ is $C_1$-$C_{10}$-alkyl or $C_1$-$C_4$-alkyl- or $C_1$-$C_4$-alkoxy-monosubstituted, -disubstituted or -trisubstituted phenyl,

$R^2$ is at each appearance independently of the other appearances hydrogen, phenoxy or chlorine,

X is a chemical bond, phenylene or phenyleneoxy,

Y is $C_6$-$C_{13}$-alkylene, and

Z is vinyl or a radical of the formula-O-CO-C($R^5$) = $CH_2$, where $R^5$ is hydrogen or methyl.

**3.** The use of a perylimide as claimed in claim 1 as monomer for preparing a polymer.

**4.** A perylimide polymer containing as characteristic monomer units radicals of the formulae VI and VII

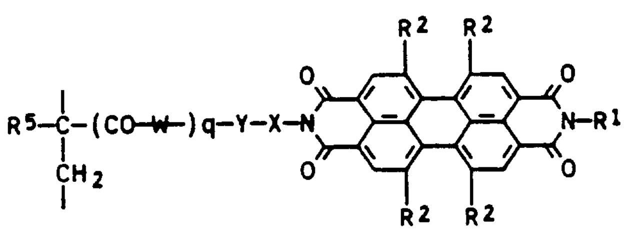

(VI)

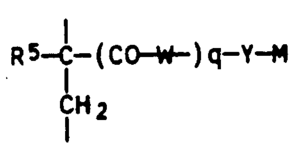

(VII)

where

$R^1$ is $C_1$-$C_{20}$-alkyl, which may be interrupted by one or more oxygen atoms, or is phenyl which is monosubstituted or polysubstituted by $C_1$-$C_{13}$-alkyl or $C_1$-$C_{13}$-alkoxy,

$R^2$ is identical or different at each of its appearances, each appearance of $R^2$ being independently of the others hydrogen, chlorine, phenoxy or halogen-, $C_1$-$C_4$-alkyl- or $C_1$-$C_4$-alkoxy-substituted phenoxy,

X is a chemical bond or a radical of the formula

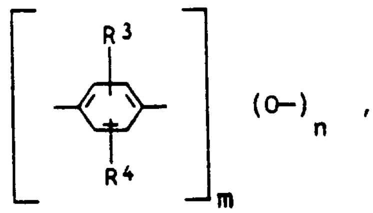

where $R^3$ and $R^4$ are identical or different and each is independently of the other hydrogen, $C_1$-$C_4$-alkyl, $C_1$-$C_4$-alkoxy or halogen, m is 1 or 2 and n is 0 or 1,

Y is $C_6$-$C_{24}$-alkylene which may be interrupted by one or more oxygen atoms or by one or more imino or $C_1$-$C_4$-alkylimino groups, and

W is oxygen, imino or $C_1$-$C_4$-alkylimino,

q is 0 or 1,

$R^5$ is hydrogen if q is 0 or hydrogen, methyl or chlorine if q is 1, and

M is a mesogenic radical, and the proportion of monomer units of the formula VI is from 0.001 to 40 % by weight, based on the weight of the polymer, and the average molecular weight of the polymer is from 2,000 to 100,000.

**5.** A perylimide polymer containing as characteristic monomer units radicals of the formulae VIII and IX

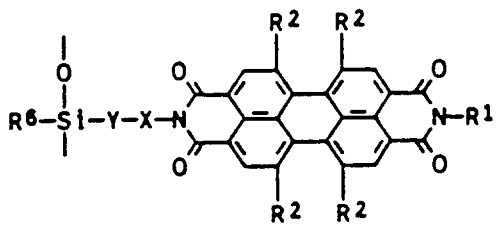

(VIII)

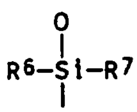

(IX)

where

$R^1$ is $C_1$-$C_{20}$-alkyl, which may be interrupted by one or more oxygen atoms, or is phenyl which is monosubstituted or polysubstituted by $C_1$-$C_{13}$-alkyl or $C_1$-$C_{13}$-alkoxy,

$R^2$ is identical or different at each of its appearances, each appearance of $R^2$ being independently of the others hydrogen, chlorine, phenoxy or halogen-, $C_1$-$C_4$-alkyl- or $C_1$-$C_4$-alkoxy-substituted phenoxy,

X is a chemical bond or a radical of the formula

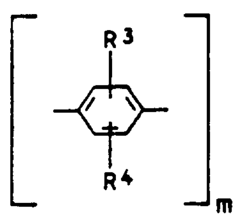

where $R^3$ and $R^4$ are identical or different and each is independently of the other hydrogen, $C_1$-$C_4$-alkyl, $C_1$-$C_4$-alkoxy or halogen, m is 1 or 2 and n is 0 or 1,

Y is $C_6$-$C_{24}$-alkylene which may be interrupted by one or more oxygen atoms or by one or more imino or $C_1$-$C_4$-alkylimino groups,

$R^6$ is $C_1$-$C_4$-alkyl or phenyl and

$R^7$ is $C_1$-$C_4$-alkyl, phenyl or a radical of the formula Y-M, where Y is as defined above and M is a mesogenic radical,

and the proportion of monomer units of the formula VIII is from 0.001 to 40 % by weight, based on the weight of the polymer, and the average molecular weight of the polymer is from 2,000 to 100,000.

## Revendications

**1.** Pérylimides de formule

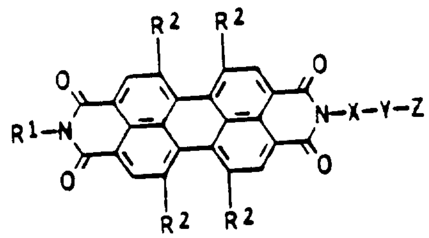

(I),

dans laquelle

$R^1$ représente un reste alkyle en $C_1$-$C_{20}$ qui est éventuellement interrompu par un ou plusieurs atomes d'oxygène, au un reste phényle qui est substitué une ou plusieurs fais par des radicaux alkyle en $C_1$-$C_{13}$ ou alcoxy en $C_1$-$C_{13}$,

$R^2$ sont identiques au différents et représentent chacun, indépendamment les uns des autres, un atome d'hydrogène, de chlore au un reste phénoxy ou phénoxy substitue par un atome d'halogène au par un radical alkyle en $C_1$-$C_4$ ou alcoxy en $C_1$-$C_4$,

X représente une liaison chimique au un reste de formule

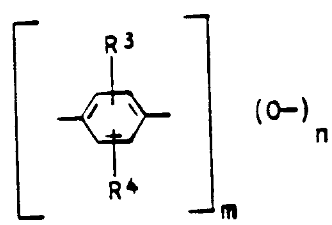

dans laquelle $R^3$ et $R^4$ sont identiques ou différents et sont mis chacun, indépendamment l'un de l'autre, pour un atome d'hydrogène, un radical alkyle en $C_1$-$C_4$ ou alcoxy en $C_1$-$C_4$ ou un atome d'halogène, m est mis pour 1 ou 2 et n est mis pour 0 ou 1,

Y représente un reste alkylène en $C_6$-$C_{24}$ qui peut être interrompu par un ou plusieurs atomes d'oxygène ou par un ou plusieurs groupements imino ou alkylimino en $C_1$-$C_4$, et

Z représente un reste vinyle ou un reste de formule W-CO-C($R^5$) = $CH_2$, dans laquelle $R^5$ est mis pour un atome d'hydrogène, un radical méthyle ou un atome de chlore et W est mis pour un atome d'oxygène ou pour un groupement imino ou alkylimino en $C_1$-$C_4$.

**2.** Pérylimides selon la revendication 1, caractérisés en ce que

$R^1$ représente un reste alkyle en $C_1$-$C_{10}$ ou un reste phényle qui est substitué une a trois fois par des radicaux alkyle en $C_1$-$C_4$ ou alcoxy en $C_1$-$C_4$,

$R^2$ représentent chacun indépendamment les uns des autres, un atome d'hydrogène, un reste phénoxy ou un atome de chlore,

X représente une liaison chimique ou un reste phénylène ou phénylènoxy,

Y représente un reste alkylène en $C_6$-$C_{13}$ et

Z représente un reste vinyle au un reste de formule -O-CO-C($R^5$) = $CH_2$, dans laquelle $R^5$ est mis pour un atome d'hydrogène ou un reste méthyle.

3. Utilisation des pérylimides selon la revendication 1 comme monomères pour la fabrication de polymères.

4. Polymères contenant des pérylimides, qui renferment, comme motifs monomères caractéristiques, des restes de formules VI et VII

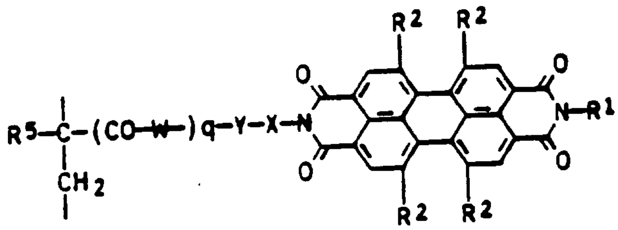

(VI)

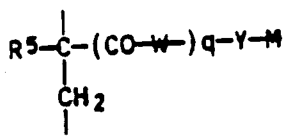

(VII)

dans lesquelles

$R^1$ représente un reste alkyle en $C_1$-$C_{20}$ qui est éventuellement interrompu par un ou plusieurs atomes d'oxygène, ou un reste phényle qui est substitué une ou plusieurs fois par des radicaux alkyle en $C_1$-$C_{13}$ ou alcoxy en $C_1$-$C_{13}$,

$R^2$ sont identiques au différents et représentent chacun, indépendamment les uns des autres, un atome d'hydrogène, de chlore ou un reste phénoxy ou phénoxy substitué par un atome d'halogène ou par un radical alkyle en $C_1$-$C_4$ ou alcoxy en $C_1$-$C_4$,

X représente une liaison chimique ou un reste de formule

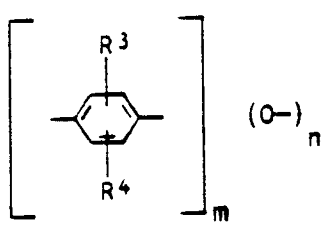

dans laquelle $R^3$ et $R^4$ sont identiques ou différents et sont mis chacun, indépendamment l'un de l'autre, pour un atome d'hydrogène, un radical alkyle en $C_1$-$C_4$ ou alcoxy en $C_1$-$C_4$ ou un atome d'hydrogène, m est mis pour 1 ou 2 et n est mis pour 0 ou 1,

Y représente un reste alkylène en $C_6$-$C_{24}$ qui peut être interrompu par un ou plusieurs atomes d'oxygène ou par un ou plusieurs groupements imino ou alkylimino en $C_1$-$C_4$,

W représente un atome d'oxygène ou un groupement imino ou alkylimino en $C_1$-$C_4$,

q est mis pour 0 ou 1,

$R^5$ représente un atome d'hydrogène dans le cas ou q est mis pour 0, ou un atome d'hydrogène, un reste méthyle ou un atome de chlore dans le cas où q est mis pour 1, et

M représente un reste mésogène,

la part des motifs monomères de formule VI étant comprise entre 0,001 et 40% en poids par rapport au poids du polymère et le poids moléculaire moyen du polymère se situant entre 2000 et 100 000.

5. Polymères contenant des pérylimides, qui renferment, comme motifs monomères caractéristiques, des restes de formules VIII et IX

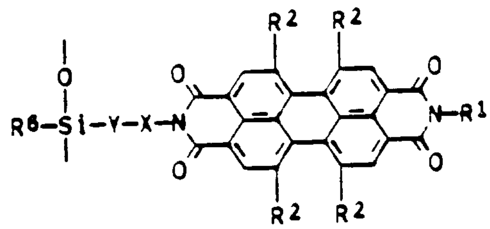

(VIII)

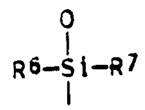

(IX)

dans lesquelles

$R^1$ représente un reste alkyle en $C_1$-$C_{20}$ qui est éventuellement interrompu par un ou plusieurs atomes d'oxygène, ou un reste phényle qui est substitué une ou plusieurs fois par des radicaux alkyle en $C_1$-$C_{13}$ ou alcoxy en $C_1$-$C_{13}$,

$R^2$ sont identiques ou différents et représentent chacun, indépendamment les uns des autres, un atome d'hydrogène, de chlore ou un reste phénoxy ou phénoxy substitué par un atome d'halogène ou par un radical alkyle en $C_1$-$C_4$ ou alcoxy en $C_1$-$C_4$,

X représente une liaison chimique ou un reste de formule

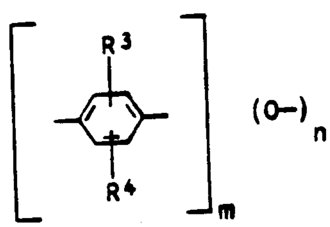

dans laquelle $R^3$ et $R^4$ sont identiques ou différents et sont mis chacun, indépendamment l'un de l'autre, pour un atome d'hydrogène, un radical alkyle en $C_1$-$C_4$ ou alcoxy en $C_1$-$C_4$ ou un atome d'halogène, m est mis pour 1 au 2 et n est mis pour 0 ou 1,

Y représente un reste alkylène en $C_6$-$C_{24}$ qui peut être interrompu par un ou plusieurs atomes d'oxygène ou par un au plusieurs groupements imino ou alkylimino en $C_1$-$C_4$,

$R^6$ représente un reste alkyle en $C_1$-$C_4$ ou phényle et

$R^7$ représente un reste alkyle en $C_1$-$C_4$, phényle ou un reste de formule Y-M, dans laquelle Y a la signification susmentionnée et M est mis pour un reste mésogène,

la part des motifs monomères de formule VIII étant comprise entre 0,001 et 40% en poids par rapport au poids du polymère et le poids moléculaire moyen du polymère se situant entre 2000 et 100 000.